# EUROPEAN PATENT SPECIFICATION

(11) **EP 3 892 770 B1**
(45) Date of publication and mention of the grant of the patent: **03.04.2024**
(21) Application number: 20185800.8
(22) Date of filing: 14.07.2020
(51) Int. Cl.: D06F 33/48, D06F 33/36, D06F 103/04, D06F 105/48, D06F 103/38, D06F 105/52, D06F 103/26

(54) **WASHING CONTROL METHOD, APPARATUS AND DEVICE FOR WASHING DEVICE, AND STORAGE MEDIUM**
WASCHSTEUERUNGSVERFAHREN, EINRICHTUNG UND VORRICHTUNG FÜR WASCHVORRICHTUNG UND SPEICHERMEDIUM
PROCÉDÉ DE COMMANDE DE LAVAGE, APPAREIL ET DISPOSITIF POUR DISPOSITIF DE LAVAGE ET SUPPORT DE STOCKAGE

(30) Priority: 09.04.2020 CN 202010273255
(43) Date of publication of application: 13.10.2021
(73) Proprietor: Wuxi Little Swan Electric Co., Ltd., Wuxi, Jiangsu 214028 (CN)
(72) Inventor: WANG, Bo, Wuxi, Jiangsu 214028 (CN)
(74) Representative: Whitlock, Holly Elizabeth Ann

(56) References cited:
- EP-A1- 1 995 366
- EP-A1- 3 290 561
- KR-A- 20120 109 006
- US-A1- 2008 196 172
- US-A1- 2015 059 416

## Description

### TECHNICAL FIELD

The present invention relates to the field of laundry washing, and more particularly, to a washing control method, apparatus and device for a washing device, and a storage medium.

### BACKGROUND

In the related art, through the rotation of an inner drum of a drum washing machine, laundry is lifted from the bottom of the inner drum by means of lifting ribs provided in the inner drum, and falls from a high place under the action of gravity to clean the laundry by tumbling the laundry onto the inner drum. In the washing mode of this tumbling washing, a rotation speed of the inner drum is generally around 50 rpm. With the advancement of a washing machine control technology, some washing machine products begin to increase the speed of rotation. By rotating the inner drum at a high speed, the laundry tightly clings to a drum wall of the inner drum and rotates along with the drum, and the laundry is squeezed and washed in the inner drum to achieve high-speed rotary drum washing, thereby improving the washing and cleaning effect of the washing machine. In the washing mode of high-speed rotary drum washing, the rotation speed of the inner drum may be 200 rpm or even higher. Under the high-speed rotary drum washing, if the center of gravity of the laundry is unstable, the washing machine is prone to vibration and even shift. On the one hand, the effect of the washing machine is affected. On the other hand, a water pipe may be disconnected and then a water leakage or even personal injury may be occurred.

US 2015/0059416 A1 relates generally to systems and methods for detecting an imbalanced load in a washing machine appliance having a balancing apparatus.

US 2008/0196172 A1 relates generally to a control method for a washing machine that is capable of reducing washing time.

### SUMMARY

Aspects of the invention are set out in the claims. In view of this, embodiments of the present application provide a washing control method, apparatus and device of a washing device, and a storage medium, which are intended to improve the phenomena of vibration and shift of the washing device in a washing process.

In the technical solution provided by the embodiments of the present application, a laundry load in a washing device is acquired, an eccentricity threshold of the washing device is determined based on the acquired load, the washing device is controlled to operate in a first washing mode, an eccentricity of the washing device in the first washing mode is acquired, and it is determined, based on the eccentricity and the eccentricity threshold, whether the washing device is switched to a second washing mode. Before switching the washing device to the second washing mode (i.e., a washing mode that the drum rotates at high-speed), a determination is performed based on the eccentricity to avoid the phenomena of vibration and shift of the washing device in the second washing mode. Moreover, in the embodiments of the present application, the eccentricity threshold is determined based on the laundry load in the washing device, corresponding eccentricity thresholds can be set according to different laundry loads in the washing device, and the washing device can be effectively switched to the second washing mode under the premise of ensuring that the washing device operates in the second washing mode reliably and smoothly, thereby improving the washing efficiency.

### BRIEF DESCRIPTION OF THE DRAWINGS

FIG. 1 is a schematic flowchart of a washing control method for a washing device according to an embodiment of the present application.
FIG. 2 is a schematic flowchart of a washing control method for a washing device according to an application embodiment of the present application.
FIG. 3 is a schematic structural diagram of a washing control apparatus for a washing device according to an embodiment of the present application.
FIG. 4 is a schematic structural diagram of a washing device according to an embodiment of the present application.

### DETAILED DESCRIPTION

The present application will be described in further detail below with reference to the accompanying drawings and embodiments.

Unless otherwise defined, all technical and scientific terms used herein have the same meaning as commonly understood by those skilled in the technical field of the present application. The terms used in the specification of the present application herein is for the purpose of describing specific embodiments, and is not intended to limit the present application.

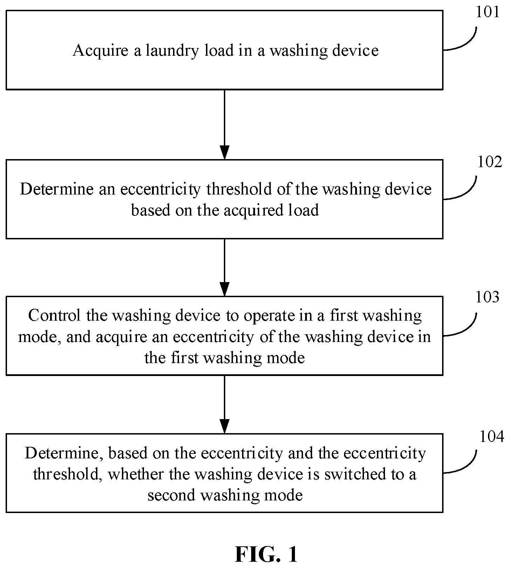

An embodiment of the present application provides a washing control method for a washing device. The washing device may be a washing machine or an integrated washing and drying machine. For example, the washing device may be a drum type or impeller type washing machine. As shown in FIG. 1, the method comprises the following steps.

At step 101, a laundry load in a washing device is acquired.

The load may be the weight of the laundry, or the size of the laundry. The load in form of the weight of the laundry is taken as an example below. Specifically, the washing device may be provided with a weighing device, and the weighing device is configured to detect the weight of the laundry in the inner drum. For example, a fuzzy weighing device may be applied to acquire the weight of the laundry in the inner drum. Alternatively, the weighing can be performed indirectly by detecting a rotation speed and/or acceleration of a motor.

At step 102, an eccentricity threshold of the washing device is determined based on the acquired load.

In some embodiments, the operation that an eccentricity threshold of the washing device is determined based on the acquired load comprises that:
a load level is determined based on the acquired load; and
an eccentricity threshold corresponding to the load level is acquired based on the load level.

The load level of the washing device may be determined by the acquired laundry weight based on a correspondence between a preset load level and a preset laundry weight. The correspondence between the preset load level and the preset laundry weight may be determined according to a load capacity of the washing device. For example, three load levels may be divided according to the load capacity of the washing device: a load level 1, a load level 2, and a load level 3, and the weight of laundry corresponding to the load level 1, the load level 2, and the load level 3 increases in sequence. In practical applications, the correspondence between the preset load level and the preset laundry weight may be a load level look-up table. After the washing device acquires the weight of the laundry, it may look up the table according to the weight of the laundry to determine the load level corresponding to the weight of the laundry.

There is a correspondence between load levels and eccentricity thresholds. The eccentricity threshold corresponding to each load level may be determined according to experiments. For example, vibration and shift tests are performed on the washing device to obtain the eccentricity thresholds under different load levels. The correspondence between load levels and eccentricity thresholds may be in form of an eccentricity threshold look-up table. After the washing device determines a load level, it may look up the table according to the load level to determine an eccentricity threshold corresponding to the load level.

At step 103, the washing device is controlled to operate in a first washing mode, and an eccentricity of the washing device in the first washing mode is acquired.

The washing device may operate in the first washing mode after water is fed to washing device by a preset water amount. In practical applications, the preset water amount may be determined according to the weight of the laundry or the load level. In addition, the eccentricity of the washing device is detected in the first washing mode. In practical applications, the washing device may acquire the eccentricity of the washing device by detecting electrical parameters of the motor. For example, the eccentricity of the washing device may be determined by acquiring a signal that reflects the speed fluctuation or torque fluctuation of the motor. When the speed fluctuation and/or torque fluctuation is greater, the corresponding eccentricity of the washing device is larger, and When the speed fluctuation and/or torque fluctuation is lower, the eccentricity is smaller.

In the related art, a drum type washing machine often uses a tumbling tumbling washing mode for washing. In the tumbling washing mode, a rotation speed of an inner drum is generally around 50 rpm, laundry is lifted from the bottom of the drum by lifting ribs provided in the drum, and falls from a high place under the action of gravity to achieve the tumbling washing. The eccentricity of the washing device often cannot be accurately acquired. In the embodiments of the present application, the washing device is controlled to operate in the first washing mode and the eccentricity of the washing device is acquired. The first washing mode refers to that the inner drum of the washing device is controlled to operate at a first rotation speed. The first rotation speed is greater than or equal to a critical rotation speed that makes laundry cling tightly to an inner wall of the inner drum and rotate along with the inner drum. In this way, the eccentricity of the washing device may be acquired. The first washing mode may be a washing process that lasts for a long time and has a cleaning effect on laundry, or may also be a stage that has a short duration and is only configured for eccentricity detection. The first rotation speed may be a fixed value or a variable dynamic value. For example, the first rotation speed is a dynamic value during course of increasing the rotation speed of the inner drum from a lower rotation speed to a higher rotation speed.

At step 104, it is determined, based on the eccentricity and the eccentricity threshold, whether the washing device is switched to a second washing mode.

The second washing mode is also referred to as a high-speed rotary drum washing mode, in which the inner drum is controlled to operate at a second rotation speed greater than the first rotation speed so that the laundry rotates along with the rotation of the inner drum. In some embodiments, the rotation speed of the inner drum may be 200 rpm or even higher. The washing efficiency can be greatly improved.

In the embodiments of the present application, before switching the washing device to the second washing mode, determination of the switching may be performed based on the eccentricity, to avoid the phenomena of vibration and shift of the washing device in the second washing mode. Moreover, the eccentricity threshold in the embodiments of the present application is determined based on the laundry load in the washing device, corresponding eccentricity thresholds can be set according to different loads laundry loads in the washing device, and the washing device can be effectively switched to the second washing mode under the premise of ensuring that the washing device operates in the second washing mode reliably and smoothly, thereby improving the washing efficiency.

In some embodiments, the operation of determining, based on the eccentricity and the eccentricity threshold, whether the washing device is switched to a second washing mode comprises that:
responsive to determining that the eccentricity is less than the eccentricity threshold, the washing device is controlled to enter the second washing mode.

In this way, when the washing device determines that the eccentricity is less than the eccentricity threshold, the washing device is switched to the second washing mode, thereby greatly improving the reliability of the washing operation of the washing device. The vibration and shift caused by the switch of the washing device to the second washing mode are effectively avoided.

In some embodiments, the operation of determining, based on the eccentricity and the eccentricity threshold, whether the washing device is switched to a second washing mode further comprises that:

responsive to determining that the eccentricity is greater than or equal to the eccentricity threshold, the method returns to the operation of controlling the washing device to operate in a first washing mode and acquiring an eccentricity of the washing device in the first washing mode; and it is determined, based on a newly acquired eccentricity and the eccentricity threshold, whether the washing device is switched to a second washing mode.

In this way, the washing device may re-operate in the first washing mode when the eccentricity is greater than or equal to the eccentricity threshold, an eccentricity of the washing device is acquired, and it is determined, based on the newly acquired eccentricity and the eccentricity threshold, whether the washing device is switched to a second washing mode (i.e. the washing device reattempts to be switched to the second washing mode). It should be noted that the washing device may directly return to the first washing mode, or may return to the first washing mode after adjustment processing. For example, the washing device may return to the tumbling washing mode and operate for a set duration and then return to the first washing mode, however, the present invention is not limited thereto.

In practical applications, the number of times that the washing device attempts to be switched to the second washing mode may be set. If the washing device fails to be switched to the second washing mode within a reasonable number of times, the washing device is controlled to continue to work in the first washing mode.

According to the invention, the second washing mode comprises at least two different rotation speeds, and the operation of controlling the washing device to enter the second washing mode comprises that:
a corresponding eccentricity level of the washing device is determined based on the eccentricity;
a corresponding rotation speed of the washing device in the second washing mode is determined based on the eccentricity level; and
the washing device is controlled to operate at the corresponding rotation speed.

In practical applications, the eccentricity of the washing device may be divided into various levels according to a preset threshold interval of the eccentricity level. The eccentricity level of the washing device is determined, and then the level of the corresponding rotation speed of the washing device in the second washing mode is determined. The levels of the rotation speed in the second washing mode are set in a one-to-one correspondence with the eccentricity levels.

In some embodiments, the operation of determining a corresponding eccentricity level of the washing device based on the eccentricity comprises that:
each threshold interval corresponding to a respective eccentricity level is acquired based on the load level of the washing device; and
a corresponding eccentricity level of the washing device is determined based on the eccentricity and the threshold intervals corresponding to the eccentricity levels.

Each eccentricity level of the washing device corresponds to a respective rotation speed in the second washing mode, and the threshold interval of each eccentricity level has a corresponding relationship with the load level.

It should be noted that in the second washing mode, a plurality of levels of the rotation speed for the operation of the washing device may be preset. For example, two or more rotation speeds may be set.

In this way, in the embodiments of the present application, the rotation speed of the second washing mode may be divided into various levels, so that the washing device may determine a corresponding rotation speed in the second washing mode based on the eccentricity, and may operate at the corresponding rotation speed.

In some embodiments, the method further comprises that:
responsive to determining that the washing device operates in the second washing mode for a set duration, the method returns to the operation of controlling the washing device to operate in a first washing mode and acquiring an eccentricity of the washing device in the first washing mode; and it is determined, based on a newly acquired eccentricity and the eccentricity threshold, whether the washing device is switched to a second washing mode, until a washing duration of the washing device is reached.

It should be noted that the washing device may directly return to the first washing mode, or may return to the first washing mode after adjustment processing. For example, the washing device may return to the tumbling washing mode and operate for a set duration and then return to the first washing mode, however, the present invention is not limited thereto.

In this way, the washing device may operate in the first washing mode and the second washing mode alternately until the washing duration of the washing device is reached.

In some embodiments, if the second washing mode has one rotation speed, the rotation speed in the second washing mode is the same every time.

In some embodiments, if the second washing mode has a plurality of rotation speeds, the rotation speed in the second washing mode every time may be determined according to the eccentricity, and each operation duration corresponding to respective one of various different rotation speeds may be the same or different.

In some embodiments, the method further comprises that:
responsive to determining that the washing device operates for the washing duration, the washing device is controlled to perform rinse operation and dehydrate operation.

The washing duration of the washing device may be set by a user or determined according to the laundry load, or a default duration may be adopted as the washing duration. The washing device is controlled to rinse and dehydrate subsequently until the end of the operation of the washing device, responsive to determining that the washing device operates for the washing duration.

The present application will be described in further detail below with reference to an application embodiment.

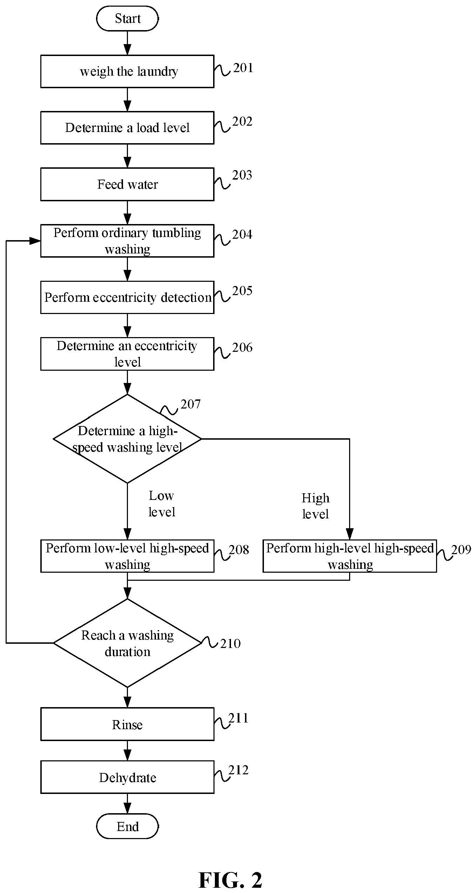

In the present application embodiment, the washing device is a drum washing machine, and the load is the weight of the laundry. The washing device may perform ordinary tumbling washing (that is, the aforementioned tumbling washing mode), the first washing mode, and high-speed level washing (that is, the aforementioned second washing mode). The high-speed level washing comprises: a low level and a high level. A rotation speed corresponding to the low level is lower than a rotation speed corresponding to the high level. As shown in FIG. 2, the washing control method of the washing device comprises the following steps.

At step 201, laundry is weighed.

The washing device acquires the weight of laundry in an inner drum through a built-in weighing device.

At step 202, a load level is determined.

The washing device determines a load level according to the acquired weight of laundry. A correspondence between a preset load level and a preset laundry weight may be determined according to a load capacity of the washing device. For example, for a washing device with a load capacity of 8 kg, a laundry weight of 0-2 kg is defined as a lower level load, a laundry weight of 2-4kg is defined as an intermediate level load, a laundry weight of 4kg-8kg is defined as a high level load, and the load level is divided in this way.

At step 203, water is fed.

The washing device controls water feeding. For example, a corresponding water feeding amount may be determined according to the laundry weight.

At step 204, ordinary tumbling washing is performed.

The washing device works in a tumbling washing mode. In this tumbling washing mode, an inner drum of the washing device operates at a rotation speed less than a critical rotation speed that makes laundry cline tightly to an inner wall of the inner drum and rotate along with the inner drum. The laundry is lifted from the bottom of the drum by lifting ribs provided in the drum, and falls from a high place under the action of gravity to achieve tumbling washing.

At step 205, eccentricity detection is performed.

The washing device may be controlled to operate in the first washing mode after operating in the tumbling washing mode for a first set duration, and acquire eccentricity of the washing device. In the first washing mode, the inner drum of the washing device operates at a first rotation speed. The first rotation speed is greater than or equal to the critical rotation speed. The eccentricity may be determined by acquiring a signal that reflects the speed fluctuation and/or torque fluctuation of a motor, for example, by acquiring a working voltage and/or working current of the motor.

At step 206, determination of an eccentricity level is performed.

The eccentricity of the washing device may be divided into various levels according to a preset threshold interval of the eccentricity level, so that eccentricity level of the washing device is determined.

For example, the eccentricity level of the washing device comprises: an eccentricity level 1 and an eccentricity level 2. A threshold interval of the eccentricity level 1 corresponds to a low level corresponding to a low rotation speed in the second washing mode, and a threshold interval of the eccentricity level 2 corresponds to a high level corresponding to a high rotation speed in the second washing mode. The load level of the washing device comprises: a load level 1, a load level 2, and a load level 3. The weights of laundry corresponding to the load level 1, the load level 2 and the load level 3 increases in sequence. For the same load level, the threshold interval corresponding to the eccentricity level 1 is greater than the threshold interval corresponding to the eccentricity level 2. The value range of the threshold interval of the eccentricity level 1 and the value range of the threshold interval of the eccentricity level 2 in different load levels are variable. For example, as the weight of the laundry increases, the possibility of accidents, such as collision with the drum, is reduced. Therefore, the threshold interval of the eccentricity level 1 and the threshold interval of the eccentricity level 2 may be increased accordingly. For example, for the load level 1, the threshold interval corresponding to the eccentricity level 1 is [L1, L2), and the threshold interval corresponding to the eccentricity level 2 is [0, L1); for the load level 2, the threshold interval corresponding to the eccentricity level 1 is [L3, L4), and the threshold interval corresponding to the eccentricity level 2 is [0, L3); for the load level 3, the threshold interval corresponding to the eccentricity level 1 is [L5, L6), and the threshold interval corresponding to the eccentricity level 2 is [0, L5); L2>L1, L4>L3, L6>L5, L6>L4>L2, and L5>L3>L1.

The washing device may determine the threshold intervals of the corresponding eccentricity level 1 and eccentricity level 2 according to the load levels. The washing device may determine, according to the acquired eccentricity, whether the eccentricity falls within the threshold interval of the eccentricity level 1 or the eccentricity level 2, and then the eccentricity level of the washing device may be determined.

In practical applications, step 206 also determines whether the eccentricity of the washing device is less than the eccentricity threshold corresponding to the load level of the washing device. If the eccentricity of the washing device is greater than or equal to the eccentricity threshold corresponding to the load level of the washing device, it is determined that the washing device cannot be switched to the second washing mode, then step 207 is not performed, and the method returns to step 204.

There is a correspondence between load levels and eccentricity thresholds. The eccentricity threshold for each load level may be determined according to experiments. For example, the load level of the washing device comprises: a load level 1, a load level 2, and a load level 3. The eccentricity threshold comprises: a first eccentricity threshold corresponding to the load level 1, a second eccentricity threshold corresponding to the load level 2, and a third eccentricity threshold corresponding to the load level 3. The weight of laundry corresponding to the load level 1, the load level 2 and the load level 3 increases in sequence. The first eccentricity threshold, the second eccentricity threshold and the third eccentricity threshold increase in sequence. In this way, the washing device may determine the corresponding eccentricity threshold according to the current load level, and it is determined, based on the acquired eccentricity, whether the washing device may be switched to the second washing mode. If the acquired eccentricity is less than the eccentricity threshold, the eccentricity level corresponding to the eccentricity is determined, otherwise, the method returns to step 204.

At step 207, determination of a high-speed washing level is performed.

Since there is a correspondence between eccentricity levels and levels of rotation speeds in the high-speed washing level, the corresponding rotation speed may be determined according to the eccentricity level. For example, if the eccentricity level of the washing device is eccentricity level 1, it can be determined that the rotation speed of the washing device in the second washing mode is low level, and step 208 is performed. If the eccentricity level of the washing device is an eccentricity level 2, it can be determined that the rotation speed of the washing device in the second washing mode is high level, and step 209 is performed.

At step 208, low-level high-speed washing is performed.

The washing device is controlled to operate at a low-level rotation speed for a corresponding duration, and step 210 is performed.

At step 209, high-level high-speed washing is performed.

The washing device is controlled to operate at a high-level rotation speed for a corresponding duration, and step 210 is performed.

At step 210, it is determined whether a washing duration is reached. If the washing duration is reached, step 211 is performed. If the washing duration is not reached, the method returns to step 204.

After the washing device operates in the second washing mode for a set duration, it is determined whether the washing duration is reached. If the washing duration is reached, step 211 is performed. If the washing duration is not reached, the method returns to step 204. The alternate of the operation of the washing device in the ordinary tumbling washing, the first washing mode and the second washing mode is realized.

At step 211, rinsing is performed.

The washing device performs a rinse for the washed laundry, and the times and duration of rinse may be set according to requirements.

At step 212, dehydration is performed.

The washing device performs a dehydration for the rinsed laundry, and then completes the washing process of the laundry.

In order to implement the method in the embodiment of the present application, an embodiment of the present application further provides a washing control apparatus for a washing device. The washing control apparatus of the washing device corresponds to the washing control method of the washing device. The steps in the above embodiment of the washing control method for the washing device are also applicable to the embodiment of the washing control apparatus of the washing device.

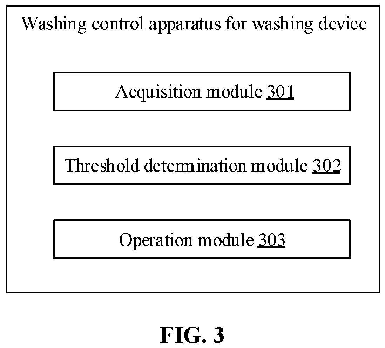

As shown in FIG. 3, the washing control apparatus for the washing device comprises: an acquisition module 301, a threshold determination module 302, and an operation module 303. The acquisition module 301 is configured to acquire a laundry load in a washing device. The threshold determination module 302 is configured to determine an eccentricity threshold of the washing device based on the acquired load. The operation module 303 is configured to control the washing device to operate in a first washing mode and acquire an eccentricity of the washing device in the first washing mode, and determine, based on the eccentricity and the eccentricity threshold, whether the washing device is switched to a second washing mode.

In the first washing mode, an inner drum of the washing device is controlled to operate at a first rotation speed greater than or equal to a critical rotation speed that makes laundry cline tightly to an inner wall of the inner drum and rotate along with the inner drum. In the second washing mode, the inner drum is controlled to operate at a second rotation speed greater than the first rotation speed.

In some embodiments, the threshold determination module 302 is specifically configured to:
determine a load level based on the acquired load; and
acquire, an eccentricity threshold corresponding to the load level, based on the load level.

In some embodiments, the operation module 303 is specifically configured to:
control, responsive to determining that the eccentricity is less than the eccentricity threshold, the washing device to enter the second washing mode.

In some embodiments, the operation module 303 is further configured to:
return to, responsive to determining that the eccentricity is greater than or equal to the eccentricity threshold, the operation of controlling the washing device to operate in a first washing mode and acquiring an eccentricity of the washing device in the first washing mode; and determine, based on a newly acquired eccentricity and the eccentricity threshold, whether the washing device is switched to a second washing mode.

According to the invention, the second washing mode comprises at least two different rotation speeds. The operation module 303 is specifically configured to:
determine a corresponding eccentricity level of the washing device based on the eccentricity;
determine a corresponding rotation speed of the washing device in the second washing mode based on the eccentricity level; and
control the washing device to operate at the corresponding rotation speed.

In some embodiments, the operation module 303 is further configured to: return to, responsive to determining that the washing device operates in the second washing mode for a set duration, the operation of controlling the washing device to operate in a first washing mode and acquiring an eccentricity of the washing device in the first washing mode; and determine, based on a newly acquired eccentricity and the eccentricity threshold, whether the washing device is switched to a second washing mode.

In some embodiments, determining, by the operation module 303, a corresponding eccentricity level of the washing device based on the eccentricity comprises:

Acquiring, each threshold interval corresponding to a respective eccentricity level, based on the load level of the washing device; and
determining a corresponding eccentricity level of the washing device based on the eccentricity and the threshold intervals corresponding to the eccentricity levels.

Each eccentricity level corresponds to a respective rotation speed in the second washing mode, and the threshold interval of each eccentricity level has a corresponding relationship with the load level.

In practical applications, the acquisition module 301, the threshold determination module 302, and the operation module 303 may be implemented by a processor in the washing control apparatus of the washing device. Of course, the processor is configured to execute a computer program in a memory to realize its function.

It should be noted that when the washing control apparatus of the washing device provided in the above embodiment performs washing control of the washing device, the above program modules is only an example for illustration. In practical applications, the processing allocation may be completed by different program modules as needed. That is, an internal structure of the apparatus is divided into different program modules to complete all or part of the processing described above. In addition, the washing control apparatus of the washing device provided by the above embodiment and the embodiment for the washing control method of the washing device belong to the same concept. The specific implementation process is described in detail in the method embodiment. Descriptions thereof are omitted herein.

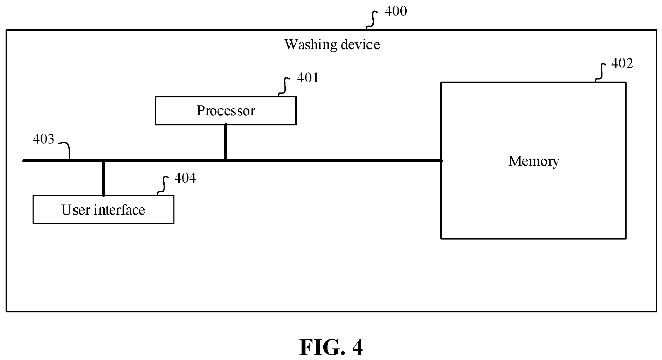

Based on the hardware implementation of the above program module, and in order to implement the method in the embodiment of the present application, an embodiment of the present application further provides a washing device. FIG. 4 only shows an exemplary structure of the washing device rather than an entire structure, and part or all of the structures shown in FIG. 4 may be implemented as needed.

As shown in FIG. 4, a washing device 400 provided by the embodiment of the present application comprises: at least one processor 401, a memory 402, and a user interface 404. Various components in the washing device 400 are coupled to each other via a bus system 403. It will be appreciated that the bus system 403 is configured to implement connection and communication between the components. The bus system 403 further comprises, in addition to a data bus, a power bus, a control bus, and a status signal bus. However, for the sake of clarity, various buses are labeled as the bus system 403 in FIG. 4.

The user interface 404 may include a display, a keyboard, a mouse, a trackball, a click wheel, keys, buttons, a touch panel, or a touch screen.

The memory 402 in the embodiment of the present application is configured to store various types of data to perform the operations of the washing device. Examples of the data include: any computer program configured to operate on the washing device.

The washing control method of the washing device disclosed in the embodiment of the present application may be applied in the processor 401 or implemented by the processor 401. The processor 401 may be an integrated circuit chip with a signal processing capability. In an implementation process, each step of the washing control method of the washing device may be completed by an integrated logic circuit of hardware in the processor 401 or an instruction in the form of software. The processor 401 may be a general-purpose processor, a Digital Signal Processor (DSP), or other programmable logic devices, discrete gates or transistor logic devices, discrete hardware components, etc. The processor 401 may implement or perform methods, steps, and logical block diagrams disclosed in the embodiments of the present application. The general-purpose processor may be a microprocessor or any conventional processor, etc. The steps of the method disclosed in conjunction with the embodiments of the present application may be directly embodied as being completely performed by a hardware decoding processor, or completely performed by a combination of hardware and software modules in the decoding processor. The software module may be included in a storage medium. The storage medium is located in the memory 402. The processor 401 reads information in the memory 402 and completes the steps of the washing control method of the washing device provided by the embodiment of the present application in conjunction with hardware thereof.

In an exemplary embodiment, the washing device may be implemented by one or more Application Specific Integrated Circuits (ASICs), DSPs, Programmable Logic Devices (PLDs), Complex Programmable Logic Devices (CPLDs), FPGAs, general-purpose processors, controllers, Micro Controller Units (MCUs), microprocessors, or other electronic elements, for performing the aforementioned method.

It will be appreciated that the memory 402 may be a volatile memory or a non-volatile memory, or may include both a volatile memory and a non-volatile memory. The non-volatile memory may be a Read Only Memory (ROM), a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a flash memory, a magnetic surface memory, a compact disc, or a Compact Disc Read-Only Memory (CD-ROM). The magnetic surface memory may be a magnetic disk memory or a magnetic tape memory. The volatile memory may be a Random Access Memory (RAM), which is used as an external high-speed cache. By way of example but not limitation, many forms of RAMs are available, such as a Static Random Access Memory (SRAM), a Synchronous Static Random Access Memory (SSRAM), a Dynamic Random Access Memory (DRAM), a Synchronous Dynamic Random Access Memory (SDRAM), a Double Data Rate Synchronous Dynamic Random Access Memory (DDRSDRAM), an Enhanced Synchronous Dynamic Random Access Memory (ESDRAM), a SyncLink Dynamic Random Access Memory (SLDRAM), and a Direct Rambus Random Access Memory (DRRAM). The memory described in the embodiment of the present application are intended to include, but not limited to, these and any other suitable types of memories.

In an exemplary embodiment, an embodiment of the present application further provides a storage medium, that is, a computer storage medium, which may specifically be a computer-readable storage medium. The storage medium comprises, for example, the memory 402 on which a computer program is stored. The computer program may be executed by the processor 401 of the washing device to complete the steps of the method in the embodiment of the present application. The computer-readable storage medium may be a memory such as an ROM, a PROM, an EPROM, an EEPROM, a flash memory, a magnetic surface memory, a compact disc, or a CD-ROM.

It should be noted that "first", "second" and the like are intended to distinguish similar objects, and to describe a specific sequence or a precedence.

The above is only the specific implementation of the present application. The scope of protection of the present application should be determined by the scope of protection of the claims.

## Claims

1. A washing control method for a washing device, comprising:
acquiring (101) a laundry load in a washing device;
determining (102) an eccentricity threshold of the washing device based on the acquired load;
controlling (103) the washing device to operate in a first washing mode, and acquiring an eccentricity of the washing device in the first washing mode; and
determining (104), based on the eccentricity and the eccentricity threshold, whether the washing device is switched to a second washing mode, wherein determining (104) comprises controlling, responsive to determining that the eccentricity is less than the eccentricity threshold, the washing device to enter the second washing mode,
wherein, in the first washing mode, an inner drum of the washing device is controlled to operate at a first rotation speed, the first rotation speed being greater than or equal to a critical rotation speed that makes laundry cling tightly to an inner wall of the inner drum and rotate along with the inner drum; in the second washing mode, the inner drum is controlled to operate at a second rotation speed, the second rotation speed being greater than the first rotation speed,
**characterised in that** the second washing mode comprises at least two different rotation speeds, and controlling the washing device to enter the second washing mode comprises:
determining an eccentricity level of the washing device based on the eccentricity;
determining, based on the eccentricity level, a corresponding rotation speed being one of the at least two different rotation speeds of the second washing mode; and
controlling the washing device to operate at the corresponding rotation speed.

2. The method according to claim 1, wherein determining the eccentricity threshold of the washing device based on the acquired load comprises:
determining a load level based on the acquired laundry load; and
acquiring the eccentricity threshold corresponding to the load level based on the load level.

3. The method according to any one of claims 1 or 2, further comprising:
responsive to determining that the eccentricity is greater than or equal to the eccentricity threshold, returning to the operation of controlling the washing device to operate in the first washing mode and acquiring an eccentricity of the washing device in the first washing mode; and determining, based on the newly acquired eccentricity and the eccentricity threshold, whether the washing device is switched to a second washing mode.

4. The method according to any preceding claim, further comprising:
responsive to determining that the washing device operates in the second washing mode for a set duration, returning to the operation of controlling the washing device to operate in the first washing mode and acquiring an eccentricity of the washing device in the first washing mode; and determining, based on the newly acquired eccentricity and the eccentricity threshold, whether the washing device is switched to the second washing mode.

5. The method according to any preceding claim, wherein the eccentricity level comprises a first eccentricity level and a second eccentricity level, wherein determining the first or second eccentricity level of the washing device based on the eccentricity comprises:
acquiring each threshold interval corresponding to a first or second eccentricity level based on the load level of the washing device; and
determining the corresponding first or second eccentricity level of the washing device based on the eccentricity and the threshold intervals corresponding to the eccentricity levels,
wherein each of the first and second eccentricity level corresponds to a respective rotation speed of the at least two different rotation speeds of the second washing mode, and the threshold interval of each of the first and second eccentricity level has a corresponding relationship with the load level.

6. A washing control apparatus for a washing device, comprising:
an acquisition module (301), configured to acquire a laundry load in a washing device;
a threshold determination module (302), configured to determine an eccentricity threshold of the washing device based on the acquired load; and
an operation module (303), configured to control the washing device to operate in a first washing mode and acquire an eccentricity of the washing device in the first washing mode, and determine, based on the eccentricity and the eccentricity threshold, whether the washing device is switched to a second washing mode, comprising controlling, responsive to determining that the eccentricity is less than the eccentricity threshold, the washing device to enter the second washing mode,
wherein, in the first washing mode, an inner drum of the washing device is controlled to operate at a first rotation speed, the first rotation speed being greater than or equal to a critical rotation speed that makes laundry cling tightly to an inner wall of the inner drum and rotate along with the inner drum; in the second washing mode, the inner drum is controlled to operate at a second rotation speed, the second rotation speed being greater than the first rotation speed,
**characterised in that** the second washing mode comprises at least two different rotation speeds, and controlling the washing device to enter the second washing mode comprises:
determining an eccentricity level of the washing device based on the eccentricity;
determining, based on the eccentricity level, a corresponding rotation speed being one of the at least two different rotation speeds of the the second washing mode; and
controlling the washing device to operate at the corresponding rotation speed.

7. A washing device (400), comprising: an inner drum, a weighing device configured to detect the weight of the laundry in the inner drum and the washing control apparatus of claim 6, wherein the washing control apparatus further comprises a processor (401) and a memory (402) for storing a computer program executable on the processor, which when executed by the processor, causes the washing device to perform the method of any one of claims 1 to 5.

8. A computer-readable storage medium (402) having stored thereon a computer program that, when executed by the processor of the washing device of claim 7, performs the method of any one of the claims 1 to 5.

## Patentansprüche

1. Waschsteuerungsverfahren für eine Wascheinrichtung, das Folgendes umfasst:
Erfassen (101) einer Wäscheladung in einer Wascheinrichtung;
Bestimmen (102) eines Exzentrizitätsschwellenwerts der Wascheinrichtung basierend auf der erfassten Ladung;
Steuern (103) der Wascheinrichtung, sodass sie in einem ersten Waschmodus betrieben wird, und Erfassen einer Exzentrizität der Wascheinrichtung in dem ersten Waschmodus; und
Bestimmen (104) basierend auf der Exzentrizität und dem Exzentrizitätsschwellenwert, ob die Wascheinrichtung in einen zweiten Waschmodus geschaltet wird, wobei das Bestimmen (104) umfasst, dass die Wascheinrichtung als Reaktion auf das Bestimmen, dass die Exzentrizität den Exzentrizitätsschwellenwert unterschreitet, gesteuert wird, sodass sie in den zweiten Waschmodus eintritt;
wobei eine Innentrommel der Wascheinrichtung in dem ersten Waschmodus gesteuert wird, sodass sie bei einer ersten Drehzahl betrieben wird, wobei die erste Drehzahl größer als oder gleich einer kritischen Drehzahl ist, die zur Folge hat, dass Wäsche eng an einer Innenwandung der Innentrommel anliegt und sich mit der Innentrommel mitdreht; die Innentrommel in dem zweiten Waschmodus gesteuert wird, sodass sie bei einer zweiten Drehzahl betrieben wird, wobei die zweite Drehzahl größer als die erste Drehzahl ist,
**dadurch gekennzeichnet, dass** der zweite Waschmodus mindestens zwei unterschiedliche Drehzahlen umfasst und das Steuern der Wascheinrichtung, sodass sie in den zweiten Waschmodus eintritt, Folgendes umfasst:
Bestimmen einer Exzentrizitätsstufe der Wascheinrichtung basierend auf der Exzentrizität;
basierend auf der Exzentrizitätsstufe Bestimmen einer korrespondierenden Drehzahl, die eine der mindestens zwei unterschiedlichen Drehzahlen des zweiten Waschmodus ist; und
Steuern der Wascheinrichtung, sodass sie bei der korrespondierenden Drehzahl betrieben wird.

2. Verfahren nach Anspruch 1, wobei das Bestimmen des Exzentrizitätsschwellenwerts der Wascheinrichtung basierend auf der erfassten Ladung Folgendes umfasst:
Bestimmen einer Beladungsstufe basierend auf der erfassten Wäscheladung; und
Erfassen des mit der Beladungsstufe korrespondierenden Exzentrizitätsschwellenwerts basierend auf der Beladungsstufe.

3. Verfahren nach Anspruch 1 oder 2, das ferner Folgendes umfasst:
als Reaktion auf das Bestimmen, dass die Exzentrizität größer als oder gleich dem Exzentrizitätsschwellenwert ist, Zurückspringen zum Vorgang des Steuerns der Wascheinrichtung, sodass sie in dem ersten Waschmodus betrieben wird, und Erfassen einer Exzentrizität der Wascheinrichtung in dem ersten Waschmodus; und Bestimmen basierend auf der neu erfassten Exzentrizität und dem Exzentrizitätsschwellenwert, ob die Wascheinrichtung in einen zweiten Waschmodus geschaltet wird.

4. Verfahren nach einem der vorhergehenden Ansprüche, das ferner Folgendes umfasst:
als Reaktion auf das Bestimmen, dass die Wascheinrichtung eine festgelegte Zeit lang in dem zweiten Waschmodus betrieben wird, Zurückspringen zum Vorgang des Steuerns der Wascheinrichtung, sodass sie in dem ersten Waschmodus betrieben wird, und Erfassen einer Exzentrizität der Wascheinrichtung in dem ersten Waschmodus; und Bestimmen basierend auf der neu erfassten Exzentrizität und dem Exzentrizitätsschwellenwert, ob die Wascheinrichtung in den zweiten Waschmodus geschaltet wird.

5. Verfahren nach einem der vorhergehenden Ansprüche, wobei die Exzentrizitätsstufe eine erste Exzentrizitätsstufe und eine zweite Exzentrizitätsstufe umfasst, wobei das Bestimmen der ersten oder der zweiten Exzentrizitätsstufe der Wascheinrichtung basierend auf der Exzentrizität Folgendes umfasst:
Erfassen jedes mit einer ersten oder einer zweiten Exzentrizitätsstufe korrespondierenden Schwellenwertintervalls basierend auf der Beladungsstufe der Wascheinrichtung; und
Bestimmen der korrespondierenden ersten oder der korrespondierenden zweiten Exzentrizitätsstufe der Wascheinrichtung basierend auf der Exzentrizität und den mit den Exzentrizitätsstufen korrespondierenden Schwellenwertintervallen,
wobei sowohl die erste als auch die zweite Exzentrizitätsstufe mit einer jeweiligen Drehzahl der mindestens zwei unterschiedlichen Drehzahlen des zweiten Waschmodus korrespondieren und das Schwellenwertintervall sowohl der ersten als auch der zweiten Exzentrizitätsstufe eine korrespondierende Beziehung zu der Beladungsstufe aufweist.

6. Waschsteuerungsvorrichtung für eine Wascheinrichtung, die Folgendes umfasst:
ein Erfassungsmodul (301), das konfiguriert ist, um eine Wäscheladung in einer Wascheinrichtung zu erfassen;
ein Schwellenwertbestimmungsmodul (302), das konfiguriert ist, um einen Exzentrizitätsschwellenwert der Wascheinrichtung basierend auf der erfassten Ladung zu bestimmen; und
ein Betriebsmodul (303), das konfiguriert ist, um die Wascheinrichtung zu steuern, sodass sie in einem ersten Waschmodus betrieben wird, und eine Exzentrizität der Wascheinrichtung in dem ersten Waschmodus zu erfassen und basierend auf der Exzentrizität und dem Exzentrizitätsschwellenwert zu bestimmen, ob die Wascheinrichtung in einen zweiten Waschmodus geschaltet wird, was umfasst, dass die Wascheinrichtung als Reaktion auf das Bestimmen, dass die Exzentrizität den Exzentrizitätsschwellenwert unterschreitet, gesteuert wird, sodass sie in den zweiten Waschmodus eintritt,
wobei eine Innentrommel der Wascheinrichtung in dem ersten Waschmodus gesteuert wird, sodass sie bei einer ersten Drehzahl betrieben wird, wobei die erste Drehzahl größer als oder gleich einer kritischen Drehzahl ist, die zur Folge hat, dass Wäsche eng an einer Innenwandung der Innentrommel anliegt und sich mit der Innentrommel mitdreht; die Innentrommel in dem zweiten Waschmodus gesteuert wird, sodass sie bei einer zweiten Drehzahl betrieben wird, wobei die zweite Drehzahl größer als die erste Drehzahl ist,
**dadurch gekennzeichnet, dass** der zweite Waschmodus mindestens zwei unterschiedliche Drehzahlen umfasst und das Steuern der Wascheinrichtung, sodass sie in den zweiten Waschmodus eintritt, Folgendes umfasst:
Bestimmen einer Exzentrizitätsstufe der Wascheinrichtung basierend auf der Exzentrizität;
basierend auf der Exzentrizitätsstufe Bestimmen einer korrespondierenden Drehzahl, die eine der mindestens zwei unterschiedlichen Drehzahlen des zweiten Waschmodus ist; und
Steuern der Wascheinrichtung, sodass sie bei der korrespondierenden Drehzahl betrieben wird.

7. Wascheinrichtung (400), die Folgendes umfasst: eine Innentrommel, eine Wiegeeinrichtung, die konfiguriert ist, um das Gewicht der Wäsche in der Innentrommel zu erkennen, und die Waschsteuerungsvorrichtung nach Anspruch 6, wobei die Waschsteuerungsvorrichtung ferner einen Prozessor (401) und einen Speicher (402) zum Speichern eines in dem Prozessor ausführbaren Computerprogramms umfasst, das, wenn es von dem Prozessor ausgeführt wird, bewirkt, dass die Wascheinrichtung das Verfahren nach einem der Ansprüche 1 bis 5 durchführt.

8. Computerlesbares Speichermedium (402), in dem ein Computerprogramm gespeichert ist, das, wenn es von dem Prozessor der Wascheinrichtung nach Anspruch 7 ausgeführt wird, das Verfahren nach einem der Ansprüche 1 bis 5 durchführt.

## Revendications

1. Procédé de commande de lavage pour un dispositif de lavage, comportant les étapes consistant à :
acquérir (101) une charge de linge dans un dispositif de lavage ;
déterminer (102) un seuil d'excentricité du dispositif de lavage en fonction de la charge acquise ;
commander (103) le dispositif de lavage pour qu'il fonctionne dans un premier mode de lavage, et acquérir une excentricité du dispositif de lavage dans le premier mode de lavage ; et
déterminer (104), en fonction de l'excentricité et du seuil d'excentricité, si le dispositif de lavage est commuté dans un deuxième mode de lavage, dans lequel l'étape consistant à déterminer (104) comporte l'étape consistant à commander, en réponse à la détermination comme quoi l'excentricité est inférieure au seuil d'excentricité, le dispositif de lavage pour qu'il passe dans le deuxième mode de lavage,
dans lequel, dans le premier mode de lavage, un tambour intérieur du dispositif de lavage est commandé pour qu'il fonctionne à une première vitesse de rotation, la première vitesse de rotation étant supérieure ou égale à une vitesse de rotation critique qui fait adhérer le linge fermement contre une paroi intérieure du tambour intérieur et qui le fait tourner en même temps que le tambour intérieur ; dans le deuxième mode de lavage, le tambour intérieur est commandé pour qu'il fonctionne à une deuxième vitesse de rotation, la deuxième vitesse de rotation étant supérieure à la première vitesse de rotation,
**caractérisé en ce que** le deuxième mode de lavage comporte au moins deux différentes vitesses de rotation, et l'étape consistant à commander le dispositif de lavage pour qu'il passe dans le deuxième mode de lavage comporte les étapes consistant à :
déterminer un niveau d'excentricité du dispositif de lavage en fonction de l'excentricité ;
déterminer, en fonction du niveau d'excentricité, une vitesse de rotation correspondante qui est l'une parmi lesdites au moins deux différentes vitesses de rotation du deuxième mode de lavage ; et
commander le dispositif de lavage pour qu'il fonctionne à la vitesse de rotation correspondante.

2. Procédé selon la revendication 1, dans lequel l'étape consistant à déterminer le seuil d'excentricité du dispositif de lavage en fonction de la charge acquise comporte les étapes consistant à :
déterminer un niveau de charge en fonction de la charge de linge acquise ; et
acquérir le seuil d'excentricité correspondant au niveau de charge en fonction du niveau de charge.

3. Procédé selon l'une quelconque des revendications 1 ou 2, comportant par ailleurs les étapes consistant à :
en réponse à la détermination comme quoi l'excentricité est supérieure ou égale au seuil d'excentricité, repasser à l'opération consistant à commander le dispositif de lavage pour qu'il fonctionne dans le premier mode de lavage et acquérir une excentricité du dispositif de lavage dans le premier mode de lavage ; et déterminer, en fonction de l'excentricité nouvellement acquise et du seuil d'excentricité, si le dispositif de lavage est commuté dans le deuxième mode de lavage.

4. Procédé selon l'une quelconque des revendications précédentes, comportant par ailleurs les étapes consistant à :
en réponse à la détermination comme quoi le dispositif de lavage fonctionne dans le deuxième mode de lavage pendant une durée déterminée, repasser à l'opération consistant à commander le dispositif de lavage pour qu'il fonctionne dans le premier mode de lavage et acquérir une excentricité du dispositif de lavage dans le premier mode de lavage ; et déterminer, en fonction de l'excentricité nouvellement acquise et du seuil d'excentricité, si le dispositif de lavage est commuté dans le deuxième mode de lavage.

5. Procédé selon l'une quelconque des revendications précédentes, dans lequel le niveau d'excentricité comporte un premier niveau d'excentricité et un deuxième niveau d'excentricité, dans lequel l'étape consistant à déterminer le premier ou le deuxième niveau d'excentricité du dispositif de lavage en fonction de l'excentricité comporte les étapes consistant à :
acquérir chaque intervalle de seuil correspondant à un premier ou un deuxième niveau d'excentricité en fonction du niveau de charge du dispositif de lavage ; et
déterminer le premier ou le deuxième niveau d'excentricité correspondant du dispositif de lavage en fonction de l'excentricité et des intervalles de seuil correspondant aux niveaux d'excentricité,
dans lequel chacun parmi les premier et deuxième niveaux d'excentricité correspond à une vitesse de rotation respective desdites au moins deux différentes vitesses de rotations du deuxième mode de lavage, et l'intervalle de seuil de chacun parmi les premier et deuxième niveaux d'excentricité a une relation correspondante avec le niveau de charge.

6. Appareil de commande de lavage pour un dispositif de lavage, comportant :
un module d'acquisition (301), configuré pour acquérir une charge de linge dans un dispositif de lavage ;
un module de détermination de seuil (302), configuré pour déterminer un seuil d'excentricité du dispositif de lavage en fonction de la charge acquise ; et
un module de fonctionnement (303), configuré pour commander le dispositif de lavage pour qu'il fonctionne dans un premier mode de lavage et pour acquérir une excentricité du dispositif de lavage dans le premier mode de lavage, et pour déterminer, en fonction de l'excentricité et du seuil d'excentricité, si le dispositif de lavage est commuté dans un deuxième mode de lavage, comportant la commande, en réponse à la détermination comme quoi l'excentricité est inférieure au seuil d'excentricité, du dispositif de lavage pour qu'il passe dans le deuxième mode de lavage,
dans lequel, dans le premier mode de lavage, un tambour intérieur du dispositif de lavage est commandé pour qu'il fonctionne à une première vitesse de rotation, la première vitesse de rotation étant supérieure ou égale à une vitesse de rotation critique qui fait adhérer le linge fermement contre une paroi intérieure du tambour intérieur et qui le fait tourner en même temps que le tambour intérieur ; dans le deuxième mode de lavage, le tambour intérieur est commandé pour qu'il fonctionne à une deuxième vitesse de rotation, la deuxième vitesse de rotation étant supérieure à la première vitesse de rotation,
**caractérisé en ce que** le deuxième mode de lavage comporte au moins deux différentes vitesses de rotation, et l'étape consistant à commander le dispositif de lavage pour qu'il passe dans le deuxième mode de lavage comporte les étapes consistant à :
déterminer un niveau d'excentricité du dispositif de lavage en fonction de l'excentricité ;
déterminer, en fonction du niveau d'excentricité, une vitesse de rotation correspondante qui est l'une parmi lesdites au moins deux différentes vitesses de rotation du deuxième mode de lavage ; et
commander le dispositif de lavage pour qu'il fonctionne à la vitesse de rotation correspondante.

7. Dispositif de lavage (400), comportant : un tambour intérieur, un dispositif de pesage configuré pour détecter le poids du linge dans le tambour intérieur et l'appareil de commande de lavage selon la revendication 6, dans lequel le dispositif de commande de lavage comporte par ailleurs un processeur (401) et une mémoire (402) servant à stocker un programme informatique en mesure d'être exécuté sur le processeur, qui, quand il est exécuté par le processeur, amène le dispositif de lavage à exécuter le procédé selon l'une quelconque des revendications 1 à 5.

8. Support de stockage lisible par ordinateur (402) ayant, stocké sur celui-ci, un programme informatique qui, quand il est exécuté par le processeur du dispositif de lavage selon la revendication 7, exécute le procédé selon l'une quelconque des revendications 1 à 5.
